# EUROPEAN PATENT APPLICATION

(11) **EP 1 830 104 A1**
(43) Date of publication of application: **05.09.2007**
(21) Application number: 05800465.6
(22) Date of filing: 31.10.2005
(51) Int. Cl.: F16H 25/22

(54) **ROLLER SCREW**

(30) Priority: 12.11.2004 JP 2004328496
(71) Applicant: THK CO., LTD., Tokyo 141-8503 (JP)
(72) Inventor: YOSHIDA, Akimasa, THK Co., Ltd., Tokyo 141-8503 (JP)
(74) Representative: Grünecker, Kinkeldey, Stockmair & Schwanhäusser Anwaltssozietät
(86) International application number: PCT/JP2005/019980
(87) International publication number: WO 2006/051706

(57) **Abstract**

The present invention provides a roller screw capable of preventing retainers from coming into contact with wall surfaces of a load roller rolling path and a curved section of an unloaded roller return path and enabling the retainers to move the rollers t smoothly in both the load roller rolling path and unloaded roller return path.

On the front surface of the retainer 8 interposed between the rollers of the roller screw, there are formed a first inclined surface 34 for, in the load roller rolling path 9, keeping an angle formed by axis lines of two adjacent rollers 7 disposed on both sides of the retainer 8 to a predetermined angle (α) as viewed in a direction of axis line of the screw shaft 5, and a second inclined surface 35 for, in a curved section 16 extending curvedly of the unloaded roller return path, keeping the angle formed by the axis lines of the two rollers 7 disposed on both sides of the retainer 8 to a predetermined angle (β) different from the angle (α) as viewed in a direction orthogonal to a plane including the curved section 16.

## Description

### TECHNICAL FIELD

The present invention relates to a roller screw having rollers capable of rolling between a screw shaft and a nut.

### BACKGROUND ART

A ball screw having balls capable of rolling between a screw shaft and a nut has been in the actual use in a positioning mechanism of a machine tool/robot, a feeding mechanism, a steering gear of a vehicle and the like as it allows reduction of the friction factor in rolling the screw shaft relative to the nut as compared with a sliding-contact type screw.

In these years, in order to increase an allowable load, there has been devised a roller screw using rollers as rolling elements, instead of balls, which is disclosed in for example in the patent document 1. In such a roller screw, a screw shaft has a roller rolling groove formed on the outer surface thereof and a nut has a load roller rolling groove spirally formed on the inner surface thereof to face the roller rolling groove of the screw shaft. The plural rollers as rolling elements are arranged and held in a load roller rolling path between the roller rolling groove of the screw shaft and the roller rolling groove of the nut. The nut also has a circulation member provided to form an unloaded roller return path connecting an end of the load roller rolling path to the other, and this circulation member is used to circulate the rollers rolling in the load roller rolling path. Between the plural rollers, there is provided a retainer for preventing contact between the rollers.

### DISCLOSURE OF THE INVENTION

### PROBLEMS TO BE SOLVED BY THE INVENTION

In the load roller rolling path, the rollers move on a spiral track. At a curved section of the unloaded roller return path, the rollers move on a curved track. Since the rollers roll in only one direction though balls are capable of rolling in every direction, it is generally difficult to move the rollers on the spiral or curved track smoothly.

In order to solve this problem, it is contemplated that the rollers are arranged in such a manner that the axis line of each of the rollers is directed to the center of the track. However, if a retainer is provided between each adjacent two of the thus-arranged rollers to make the axis lines of the two both-side rollers parallel with each other, the retainer moves inwardly in the path as the rollers move, and may be finally brought into contact with the inner-side wall of the path.

In addition, after passing through the spiral load roller rolling path, the rollers go away from the load roller rolling path into the curved section of the unloaded roller return path. The curvature radius and the inner side of each roller rolling are about 90 degrees different between the load roller rolling path and the curved section of the unloaded roller return path (as described in detail later). Then, there is a demand for a retainer that allows the rollers to move smoothly in both of the load roller rolling path and unloaded roller return path in consideration of the differences of the load roller rolling path and the curved section of the unloaded roller return path.

Then, the present invention has an object to provide a roller screw capable of preventing retainers from coming into contact with wall surfaces of a load roller rolling path and a curved section of an unloaded roller return path and enabling the retainers to move the rollers smoothly in both the load roller rolling path and unloaded roller return path.
Patent document 1: Japanese Laid-open patent publication No.11-210858

### MEANS FOR SOLVING THE PROBLEMS

Description will now be made of the present invention. For ease in understanding the present invention, the reference numerals in accompanying drawings are added in parentheses to the following description. However, these are not for limiting the present invention to the embodiments illustrated in the drawings.

In order to solve the above-described problems, the invention of claim 1 provides a roller screw having: a screw shaft having a spiral roller rolling groove formed on an outer surface; a nut having a spiral roller rolling groove formed on an inner surface to face the roller rolling groove of the screw shaft; a circulation member having a unloaded roller return path formed to connect one end of a load roller rolling path between the roller rolling groove of the screw shaft and the roller rolling groove of the nut to an opposite end of the load roller rolling path; a plurality of rollers arranged in the load roller rolling path and the unloaded roller return path; and a retainer arranged between adjacent two of the rollers, the retainer having on a front surface in contact with a corresponding roller of the rollers a first inclined surface for, in the load roller rolling path, keeping an angle formed by axis lines of the two rollers at both sides of the retainer to a predetermined angle (α) as viewed in a direction of axis line of the screw shaft, and a second inclined surface for, in a curved section extending curvedly of the unloaded roller return path, keeping the angle formed by the axis lines of the two rollers at both sides of the retainer to a predetermined angle (β) different from the angle (α) as viewed in a direction orthogonal to a plane including the curved section.

The invention of claim 2 is characterized in that in the load roller rolling path, the axis lines of the rollers are directed to a center (A) of a circular track of the load roller rolling path as viewed in the direction of axis line of the screw shaft, and in the curved section of the unloaded roller return path, the axis lines of the rollers are directed to a center (B) of a curved track of the curved section as viewed in the direction orthogonal to the plane including the curved section.

The invention of claim 3 is characterized in that, in the roller screw of claim 1 or 2, an edge line is formed between the first inclined surface and the second inclined surface.

The invention of claim 4 is characterized in that, in the roller screw of any one of claims 1 to 3, the roller rolling groove of the screw shaft is V-shaped in cross section, the roller rolling groove of the nut is V-shaped in cross section, the load roller rolling path and the unloaded roller return path are almost box-shaped in cross section, each of the rollers is cylindrical in cross section, and in the load roller rolling path and the unloaded roller return path the rollers are cross-arranged in such a manner that the axis lines of the two adjacent rollers are orthogonal to each other as viewed in a moving direction of the rollers.

The invention of claim 5 is characterized in that, in the roller screw of any one of claims 1 to 4, the unloaded roller return path has a straight-line section extending straight in parallel with the axis line of the screw shaft, and the curved section of the unloaded roller return path is provided at each end of the straight-line section to be connected to the load roller rolling path.

The invention of claim 6 provides a roller screw having: a screw shaft having a spiral roller rolling groove formed on an outer surface; a nut having a spiral roller rolling groove formed on an inner surface to face the roller rolling groove of the screw shaft; a circulation member having a unloaded roller return path formed to connect one end of a load roller rolling path between the roller rolling groove of the screw shaft and the roller rolling groove of the nut to an opposite end of the load roller rolling path; a plurality of rollers arranged in the load roller rolling path and the unloaded roller return path; and a retainer arranged between adjacent two of the rollers, the retainer having on a front surface in contact with a corresponding roller of the rollers a first inclined surface for keeping an angle formed by axis lines of the two rollers at both sides of the retainer to a predetermined angle (α) and a second inclined surface for keeping the angle formed by the axis lines of the two rollers at both sides of the retainer to a predetermined angle (β) different from the angle (α).

The invention of claim 7 provides a roller screw having: a screw shaft having a spiral roller rolling groove formed on an outer surface; a nut having a spiral roller rolling groove formed on an inner surface to face the roller rolling groove of the screw shaft; a circulation member having a unloaded roller return path formed to connect one end of a load roller rolling path between the roller rolling groove of the screw shaft and the roller rolling groove of the nut to an opposite end of the load roller rolling path; a plurality of rollers arranged in the load roller rolling path and the unloaded roller return path; and a retainer arranged between adjacent two of the rollers, the retainer having on a front surface in contact with a corresponding roller of the rollers a first inclined surface for, in the load roller rolling path, keeping an angle formed by axis lines of the two rollers at both sides of the retainer to a predetermined angle (α) as viewed in a direction of axis line of the screw shaft, and in the load roller rolling path, the axis lines of the rollers being directed to a center (A) of a circular track of the load roller rolling path as viewed in the direction of axis line of the screw shaft.

The invention of claim 8 provides a roller screw having: a screw shaft having a spiral roller rolling groove formed on an outer surface; a nut having a spiral roller rolling groove formed on an inner surface to face the roller rolling groove of the screw shaft; a circulation member having a unloaded roller return path formed to connect one end of a load roller rolling path between the roller rolling groove of the screw shaft and the roller rolling groove of the nut to an opposite end of the load roller rolling path; a plurality of rollers arranged in the load roller rolling path and the unloaded roller return path; and a retainer arranged between adjacent two of the rollers, the retainer having on a front surface in contact with a corresponding roller of the rollers a second inclined surface for, in a curved section extending curvedly of the unloaded roller return path, keeping the angle formed by the axis lines of the two rollers at both sides of the retainer to a predetermined angle (β) as viewed in a direction orthogonal to a plane including the curved section and in the curved section of the unloaded roller return path, the axis lines of the rollers being directed to a center (B) of a curved track of the curved section as viewed in the direction orthogonal to the plane including the curved section.

### EFFECTS OF THE INVENTION

According to the invention of claim 1, since the retainer is provided with the first inclined surface and the second inclined surface corresponding to the load roller rolling path and the curved section of the unloaded roller return path, respectively, it is possible to prevent the retainer from coming into contact with the wall surfaces of both the load roller rolling path and the direction change path.

According to the invention of claim 2, as each of the rollers is moved having the axis line thereof directed to the center of the curved path, it is possible to move the roller smoothly along the load roller rolling path and the curved section of the unloaded roller return path.

According to the invention of claim 3, the contact position of a roller and a retainer is changed between the first inclined surface and the second inclined surface disposed on both sides of the edge line.

According to the invention of claim 4, when a cylindrical roller is moved along the load roller rolling path and the curved section of the unloaded roller return path, there may occur larger sliding at the inner side of the roller than at the outer side. This is likely to cause a skew in which the rolling roller is inclined with respect to the give axis line. The retainer used in the present invention is able to prevent occurrence of skew effectively.

When the unloaded roller return path is configured as defined in claim 5, the curved section of the unloaded roller return path is arranged in a plane almost parallel with the axis line of the screw shaft. Meanwhile, the load roller rolling path is arranged in a plane inclined by the lead angle relative to the plane orthogonal to the axis line of the screw shaft. The present invention is effectively applied to such a roller screw as has the load roller rolling path and the unloaded roller return path.

According to the invention of claim 6, since the retainer is provided with the first inclined surface and the second inclined surface corresponding to the load roller rolling path and the curved section of the unloaded roller return path, respectively, it is possible to prevent the retainer from coming into contact with the wall surfaces of both the load roller rolling path and the direction change path.

According to the invention of claim 7, as in the load roller rolling path, each roller is moved with the axis line thereof being directed to the center of the circular load roller rolling path as viewed in the direction of axis line of the screw shaft, it is possible to move the roller smoothly along the load roller rolling path.

According to the invention of claim 8, as in the curved section of the unloaded roller return path, each roller is moved with the axis line thereof being directed to the center of the arc-shaped curved section as viewed in the direction orthogonal to the plane including the curved section of the unloaded roller return path, it is possible to move the roller smoothly along the arc-shaped curved section.

### BRIEF DESCRIPTION OF THE DRAWINGS

Fig. 1 is a perspective view of a roller screw according to an embodiment of the present invention.
Fig. 2 is an exploded perspective view of principle parts of the roller screw according to the embodiment of the present invention.
Fig. 3 is a side view of the roller screw having all parts assembled according to the embodiment of the present invention.
Fig. 4 is a view taken along the line IV-IV of Fig. 3 and viewed in the direction of the arrows.
Fig. 5 is a side view of a screw shaft according to the embodiment of the present invention.
Fig. 6 is a view illustrating a right-angled cross section of a roller rolling groove of the screw shaft according to the embodiment of the present invention.
Figs. 7A to 7C are detail views of a nut according to the embodiment of the present invention, Fig. 7A being an elevation view of the nut, Fig. 7B being a cross-sectional view of the nut taken along the axis line direction, and Fig. 7C being a back side view of the nut.
Figs. 8A and 8B are detail views of a mounting seat of a direction change path member according to the embodiment of the present invention (Fig. 8B is a cross-sectional view taken along the line B-B of Fig. 8A).
Fig. 9 is a view illustrating a right-angled cross section of a roller rolling groove of the nut according to the embodiment of the present invention.
Fig. 10 is side view of a roller according to the embodiment of the present invention.
Fig. 11 is a cross-sectional view illustrating a roller in the load roller rolling path according to the embodiment of the present invention.
Figs. 12A and 12B are views illustrating the center line of a track of a roller circulating in the spiral load roller rolling path, an arc-shaped direction change path and a straight-line section according to the embodiment of the present invention.
Figs. 13A and 13B are views illustrating the positional relationship between a direction change path member mounted on one end surface of a nut and a direction change path member mounted on the other end surface according to the embodiment of the present invention.
Figs. 14A and 14B are views each illustrating an inner-side member of the direction change path member according to the embodiment of the present invention (Fig. 14A is an elevation view and Fig. 14B is a side view).
Figs. 15A and 15B are views each illustrating the inner-side member of the direction change path member according to the embodiment of the present invention (Fig. 15 is a side view and Fig. 15B is a back side view).
Figs. 16A and 16B are views each illustrating an outer-side member of the direction change path member according to the embodiment of the present invention (Fig. 16A is an elevation view and Fig. 16B is a side view).
Figs. 17A and 17B are views each illustrating the outer-side member of the direction change path member according to the embodiment of the present invention (Fig. 17A is a side view and Fig. 17B is an elevation view).
Fig. 18 is a cross-sectional view of a pipe according to the embodiment of the present invention.
Fig. 19 is a view illustrating rotation of the attitude of a roller moving in the straight-line section according to the embodiment of the present invention.
Fig. 20 is an elevation view of a retainer (partially including a cross section taken along the line Z-Z) according to the embodiment of the present invention.
Fig. 21 is a perspective view of the retainer according to the embodiment of the present invention.
Fig. 22 is a perspective view of the load roller rolling path and the direction change path according to the embodiment of the present invention.
Figs. 23A and 23B are views illustrating rollers and a retainer moving in the load roller rolling path according to the embodiment of the present invention.
Fig. 24 is a cross sectional view of the retainer in the load roller rolling path according to the embodiment of the present invention.
Figs. 25A and 25B are views illustrating rollers and a retainers moving in the direction change path according to the embodiment of the present invention.
Fig. 26 is a cross sectional view of the retainer in the direction change path according to the embodiment of the present invention.

### BEST MODE FOR CARRYING OUT THE INVENTION

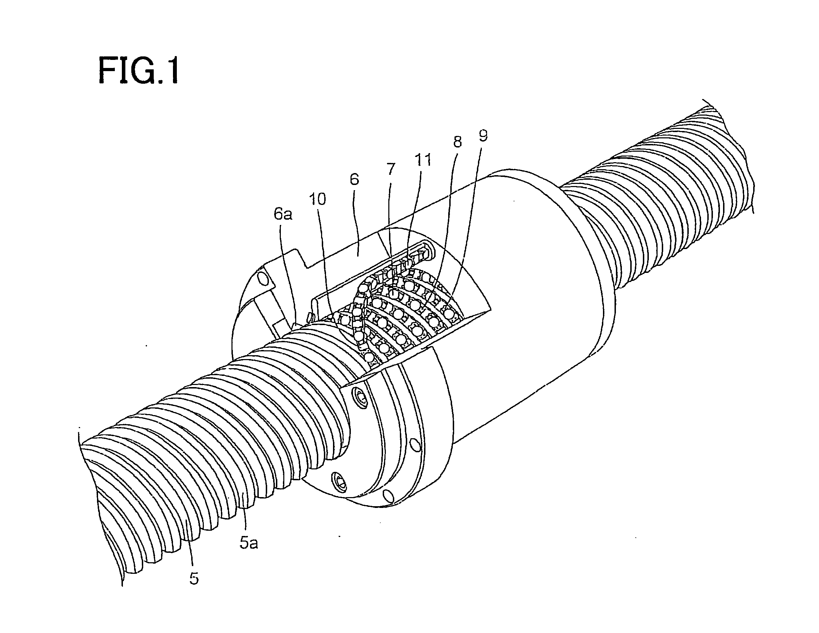

Fig. 1 illustrates a perspective view of a roller screw according to an embodiment of the present invention. The roller screw has a screw shaft 5 having a spiral roller rolling groove 5a formed on the outer surface thereof and a nut 6 having a spiral roller rolling groove 6a formed on the inner surface thereof to face the roller rolling groove 5a. In a load roller rolling path that is provided between the roller rolling groove 5a of the screw shaft 5 and the roller rolling groove 6a of the nut 6, plural rollers 7 are cross-arranged in such a manner that axis lines of two adjacent rollers are orthogonal to each other. Between rollers 7, a retainer 8 is provided to prevent the rollers 7 from coming into contact with each other.

When the nut 6 is rotated relative to the screw shaft 5, the plural rollers 7 roll in the load roller rolling path 9 between the roller rolling groove 5a and the roller rolling groove 6a. After rolling up to one end of the load roller rolling path 9, each roller 7 passes through the unloaded roller return path 10 and returns to the other end of the load roller rolling path 9 that is several-turns back from the one end.

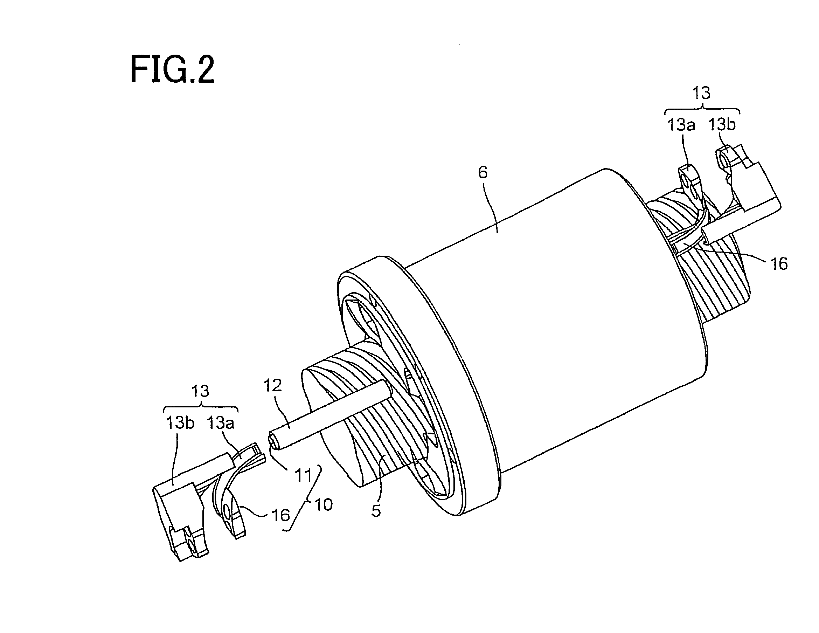

Fig. 2 is a perspective view of circulation members 12 and 13 with which the unloaded roller return path 10 is formed. The unloaded roller return path 10 is made of a straight-line section 11 extending in parallel with the axis line of the nut 6 and arc-shaped direction change paths 16 provided at respective ends of the straight-line section 11 each to serve as a curved section connecting the straight-line section 11 and the load roller rolling path 9.

The nut 6 has a through hole formed extending in parallel with the axis line of the screw shaft 5. A pipe 12 is inserted into this through hole. In this pipe 12, the straight-line section 11 is formed to have a straight track and be box-shaped in cross section. As is described in detail later, the straight-line section 11 is twisted in such a manner that the attitude of each roller 7 is rotated as the roller moves in the straight-line section 11.

A direction change path member 13 is attached to each end surface in the direction of axis line of the nut 6. In the direction change path member 13, the direction change path 16 is formed to have an arc-shaped track and be box-shaped in cross section. The direction change path member 13 is divided into two members, that is, an inner-side member 13a and an outer-side member 13b, at diagonally opposite positions of the box-shaped cross section of the direction change path 16. These inner-side member 13a and outer-side member 13b of the direction change path member 13 have flange portions. The inner-side member 13a and the outer-side member 13b of the direction change path member 13 are combined and positioned on the end surface of the nut 6, and then, the flange portions thereof are fixed to the end surface of the nut 6 with fixing means such as a bolt. As each end of the pipe 12 is fit into the direction change path member 13, the pipe 12 is also fixed to the nut 6 by fixing the direction change path member 13 to the nut 6.

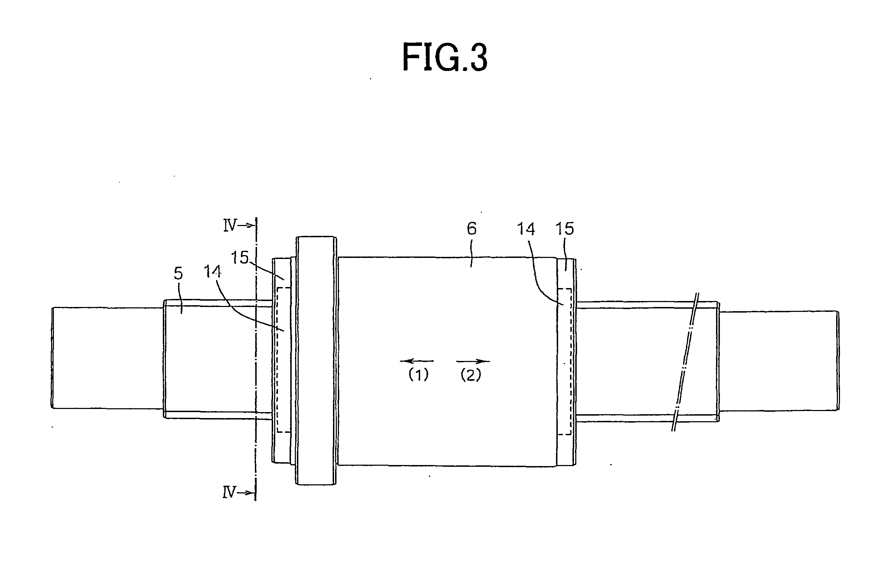

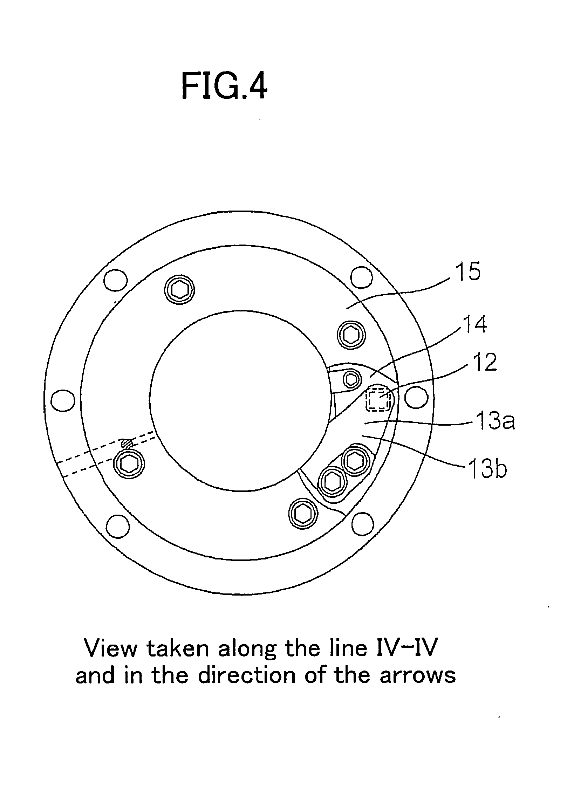

Fig. 3 is a side view of the roller screw and Fig. 4 is a cross sectional view taken along the line IV-IV and seen in the direction of the arrows. To each end surface in the direction of axis line of the nut 6 on which the above-described pipe 12 and direction change path member 13 are mounted, a labyrinth seal is affixed to remove foreign materials and prevent a lubricant agent from leaking from inside the nut 6. Besides, a cap 15 is attached to each end surface of the nut 6 to cover the labyrinth seal 14.

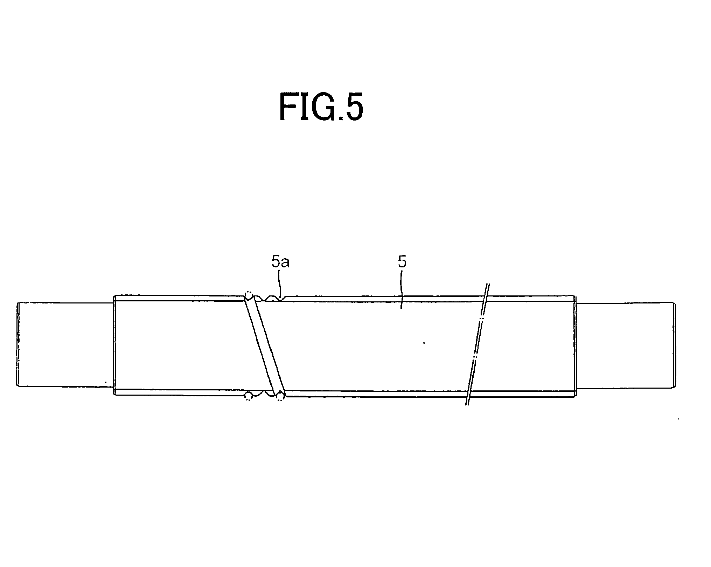

Fig. 5 illustrates the screw shaft 5. The screw shaft 5 has the spiral roller rolling groove 5a with a predetermined lead formed on the outer surface thereof. In this embodiment, in order to increase an allowable load and shorten the entire length of the nut 6, the number of threads of the roller rolling groove 5a is set to four. Needless to say, the number of threads of the roller rolling groove 5a can be set to one, two, three or the like.

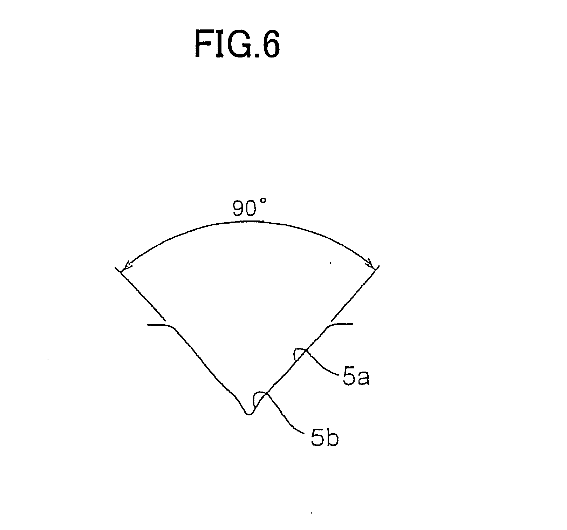

Fig. 6 illustrates a right-angled cross section of the roller rolling groove 5a of the screw shaft 5. The cross section of the roller rolling groove 5a is V-shaped and the open angle thereof is set to 90 degree. At the bottom of the roller rolling groove 5a, an arc portion 5b is formed as grinding relief so as to enable grinding at the right-angled cross point.

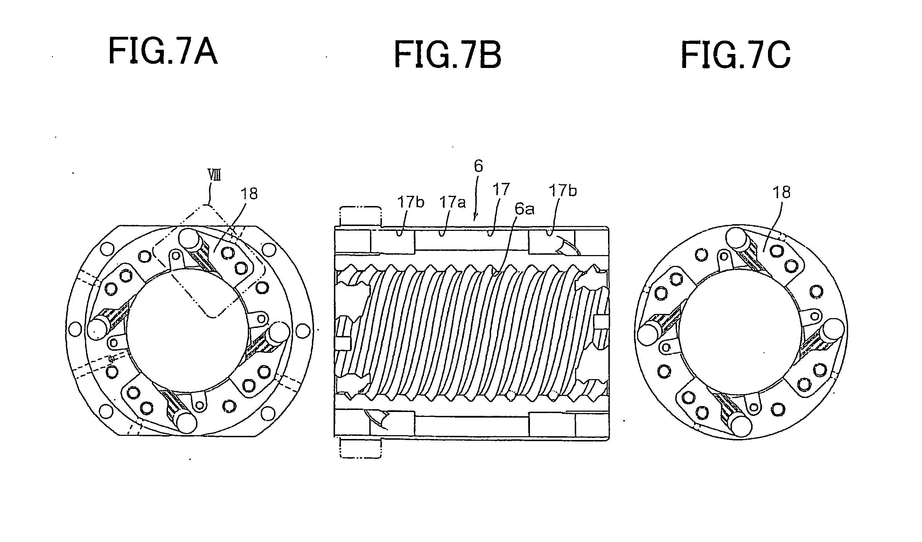

Figs. 7A to 7C are detailed views of the nut 6. Fig. 7A is a front view of the nut 6, Fig. 7B is a cross-sectional view taken along the direction of axis line of the nut 6 and Fig. 7C is a back side view of the nut 6. The nut 6 has a spiral roller rolling groove 6a formed on the inner surface of the nut 6 to face the roller rolling groove 5a of the screw shaft 5. The nut 6 also has through holes 17 formed to extend in the direction of axis line of the nut 6. Each of the through holes 17 has a center portion 17a of small diameter and both end portions 17b of large diameter formed. The pipe 12 is inserted into the center portion 17a of the through hole 17 and the direction change path member 13 is inserted into each of the end portions 17b. At each end surface of the nut 6, a mounting seat 18 is formed to attach the direction change path member 13 to the nut 6. Pipes12 and direction change path members 13 provided are as many as threads of the roller rolling groove 6a (four in this embodiment) and circulate rollers 7 rolling in the respective threads of the roller rolling groove 6a.

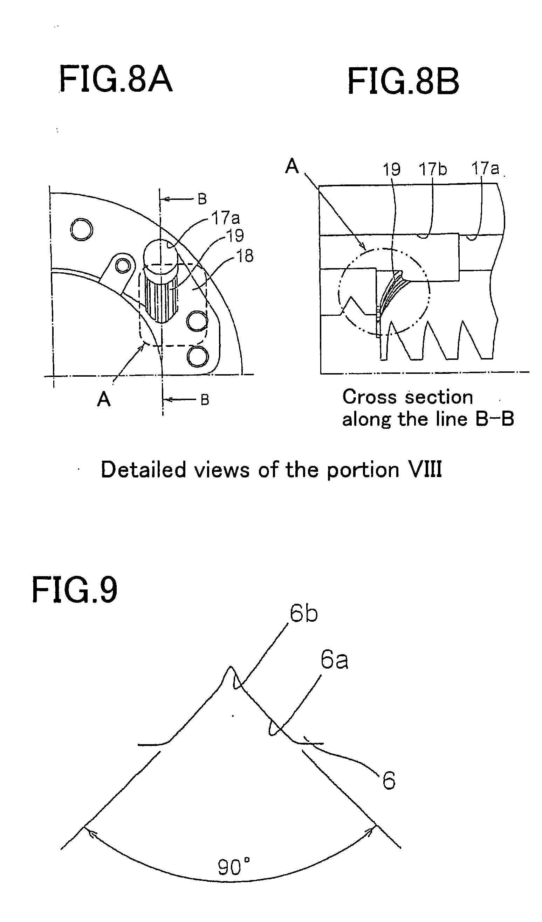

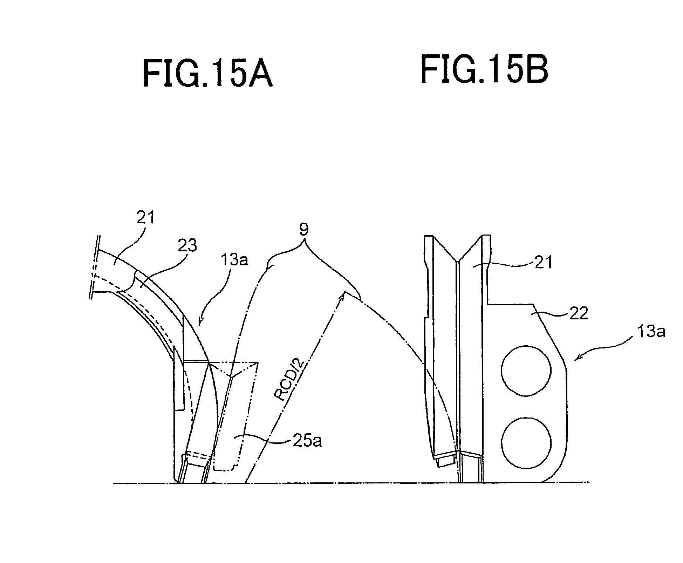

Figs. 8A and 8B are detailed views of the mounting seat 18. In the mounting seat 18, an arch-shaped escape groove 19 is formed having a shape conforming to the shape of a thin portion 23 of the direction change path member 13 as described later (see Fig. 15A) . In a typical end-cap type ball screw, each end surface of a nut is formed flat and no escape groove 19 is formed. Then, a member for making up a direction change path is formed at the flat portion. However, in case of a roller screw, the curvature radius of the direction change path 16 tends to be larger so as to circulate rollers 7 smoothly. As the curvature radius of the direction change path 16 becomes larger, the direction change path member 13 is likely to interfere with the roller rolling groove 6a of the nut 6. Such interference of the direction change path member 13 with the roller rolling groove 6a can be prevented by forming the thin portion 23 on the direction change path member 13 and also forming the escape groove 19 conforming in shape to the thin portion 23 of the direction change path member 13 on each end surface of the nut 6, even if the curvature radius of the direction change path 16 becomes larger.

Fig. 9 illustrates a right-angled cross section of the roller rolling groove 6a of the nut 6. The cross section of the roller rolling groove 6a is V-shaped and the open angle thereof is set to 90 degree. At the bottom of the roller rolling groove 6a, an arc portion 6b is formed for grinding relief to enable grinding at the right-angled cross point.

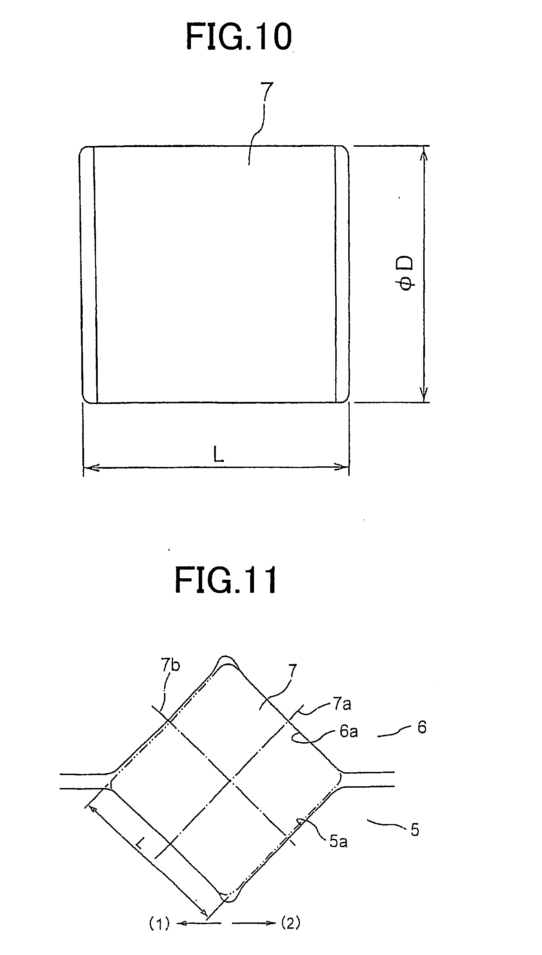

Fig. 10 is a side view of a roller 7. The roller 7 rolling in the load roller rolling path 9 takes the shape of a cylinder having a diameter D almost equal to a height L (exactly speaking, the diameter D of each roller 7 is slightly larger than the height L of the roller) . Thus, seen from the lateral side, the shape of the roller 7 is close to a square.

In this embodiment, the cross sections of the load roller rolling path 9 and the unloaded roller return path 10 are formed in square shape to conform to the lateral shape of the roller 7. Fig. 11 illustrates a roller 7 arranged in the loan roller rolling path 9. The roller 7 takes a load when the outer surface of the roller is compressed between a wall surface of the roller rolling groove 5a and a wall surface of the roller rolling groove 6a of the nut 6 opposed to the wall surface of the roll rolling groove 5a. Hence, the roller 7 takes the load only in one direction of axis line of the screw shaft 5. In other words, one roller 7 only takes a load in one direction (1) of axis line of the screw shaft 5 or the other direction (2) (the roller in Fig. 11 takes the load of only direction (1)), as compared with a ball which takes both of a load in one direction of axis line of the screw shaft and a load in the direction opposite to the one direction. In order to take both the load in one direction (1) and the load in the other direction (2), rollers 7 are required to be cross-arranged in such a manner that the axis lines 7a, 7b of two adjacent rollers 7 are orthogonal to each other as viewed in the moving direction of the rollers 7.

In this embodiment the rollers 7 are cross-arranged, and rollers taking loads in one direction (1) are equal in number to rollers taking loads in the other direction (2). However, when the allowable loads in the respective directions are set to be different, the number of rollers 7 taking a load in one direction (1) can be differentiated from the number of rollers 7 taking a load in the other direction (2). By differentiating the numbers of rollers 7 as appropriate, it is possible to freely change the allowable load in the one direction (1) and the allowable load in the other direction (2).

The diameter D of each roller 7 is slightly larger than the distance between the wall surface of the roller rolling groove 5a of the screw shaft 5 and the wall surface of the roller rolling groove 6a of the nut 6 opposed to the wall surface of the roll rolling groove 5a, and namely oversized. With this larger diameter, each roller 7 is elastically deformed in the load roller rolling path 9 and there exists a corresponding load as a preload inside the nut 6. As the rollers 7 are cross-arranged in the load roller rolling path 9, loads applied to the nut 6 from two adjacent rollers 7 act in opposite directions.

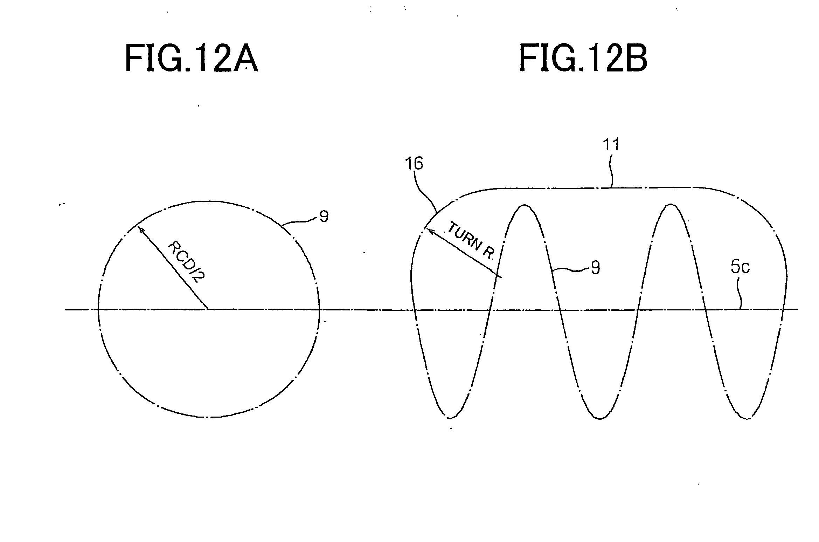

Figs. 12A and 12B illustrate the center line of a track of rollers 7circulating in the spiral load roller rolling path 9, the arc-shaped direction change path 16 and the straight-line section 11. Fig. 12A illustrates a track of rollers 7 moving in the load roller rolling path 9 (seen in the direction of axis line of the screw shaft 5), and Fig. 12B illustrates a track of rollers 7 circulating in the entire endless circulation path (seen in the lateral direction of the screw shaft 5) . The track of each roller 7 in the load roller rolling path 9 takes the shape of a circle with a radius of RCD/2 seen in the direction of axis line of the screw shaft 5. The track of each roller at the straight-line section 11 of the unloaded roller return path 10 is a straight line parallel with the axis line 5c of the screw shaft 5. The track of each roller 7 in the direction change path 16 takes the shape of an arc having a curvature radius of R.

At connected parts of the load roller rolling path 9, the direction change path 16 and the straight-line section 11, the tangential directions of the track of the rollers 7 are continuous. With this configuration, the connected parts become smooth. Specifically, at the connected part between the load roller rolling path 9 and the direction change path 16, the tangential direction of the direction change path 16 conforms to the tangential direction of the center line of the load roller rolling path 9 as viewed in the direction of axis line of the screw shaft 5, and also conforms to the lead angle of the load roller rolling path 9 as viewed in the lateral direction of the screw shaft 5. Besides, at the connected part between the straight-line section 11 and the direction change path 16, the tangential direction of the direction change path 16 conforms to the direction of extension of the center line of the straight-line section 11.

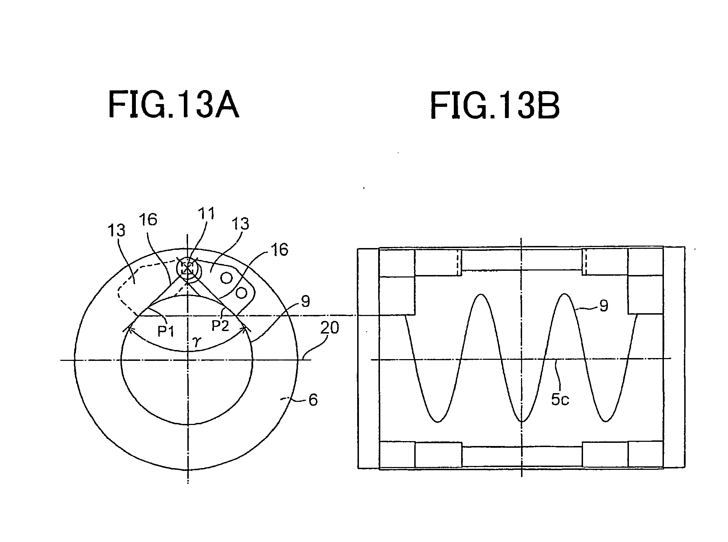

Figs. 13A and 13B illustrate the positional relationship between the direction change path member 13 path attached to one end surface of the nut 6 and the direction change path member 13 attached to the other end surface of the nut 6. As described above, the center line of the straight-line section 11 of the unloaded roller return path 10 extends in parallel with the axis line 5c of the screw shaft 5. Seen in the direction of axis line of the screw shaft 5 illustrated in Fig. 13A, the center line of the direction change path 16 extends in the tangential direction of the center line of the load roller rolling path 9. Besides, the center line of the near-side direction change path 16 and the center line of the far-side direction change path 16 cross each other at a predetermined open angle γ. The open angle γ tends to become larger as the curvature radius of the direction change path 16 is larger. In this embodiment, the curvature radius of the direction change path 16 is set to, for example, five times the diameter D of the roller 7 and the open angle is set to, for example, 90 to 100 degrees. As described in detail later, the straight-line section 11 rotates the attitude of each roller 7 moving in the path by an angle γ almost equal to the open angle.

Here, the planes P1 and P2 including the respective direction change paths 16 as the curved sections (exactly including the center lines of the direction change paths 16) are approximately parallel with the axis line of the screw shaft. Meanwhile, the spiral load roller rolling path 9 is arranged in a plane inclined by the lead angle relative to the plane orthogonal to the axis line of the screw shaft 5.

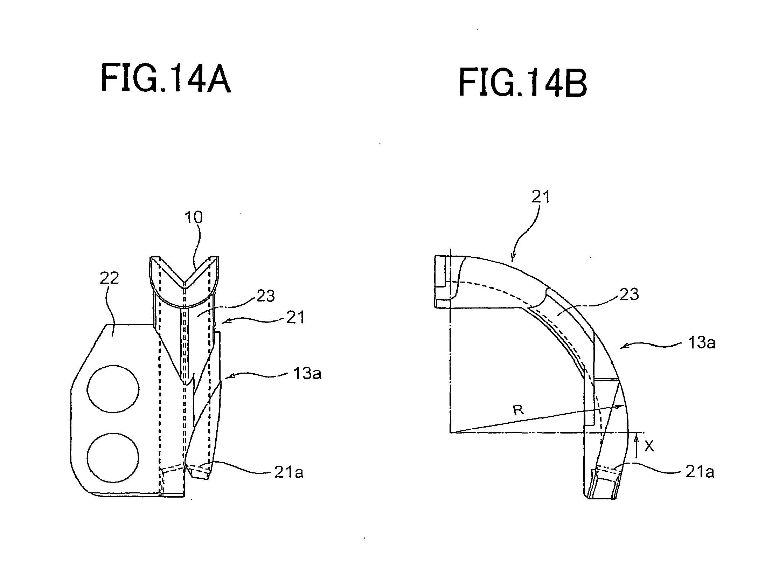

Figs. 14A, 14B, 15A and 15B illustrate the inner-side member 13a of the direction change path member. This inner-side member 13a of the direction change path member has a main body 21 where the direction change path 16 of curvature radius R is formed, and a flange portion 22 attached to an end surface of the nut 6. At one end of the main body 21, a scoop portion 21a is formed to enter the load roller rolling path 9 and scoop rollers 7. The other end of the main body 21 is fit into the pipe 12. The scoop portion 21a of the inner-side member 13a scoops rollers 7, which roll in the spiral load roller rolling path 9, in the tangential direction in cooperation with a scoop portion of an outer-side member 13b. Immediately after scooping each roller 7, the direction change path 16 changes the direction of the roller 7 and makes the roller move along the arc-shaped direction change path 16.

On the inner-side member 13a of the direction change path member, the thin portion 23 is formed as protruding toward the nut from the end surface of the nut 6 to which the direction change path member 13 is attached and as bent curvedly in conformity with the shape of the direction change path 16. The thin portion 23 is V-shaped in cross section. This thin portion 23 is fit into an escape groove 19 (see Figs. 8A and 8B) formed on the end surface of the nut 6.

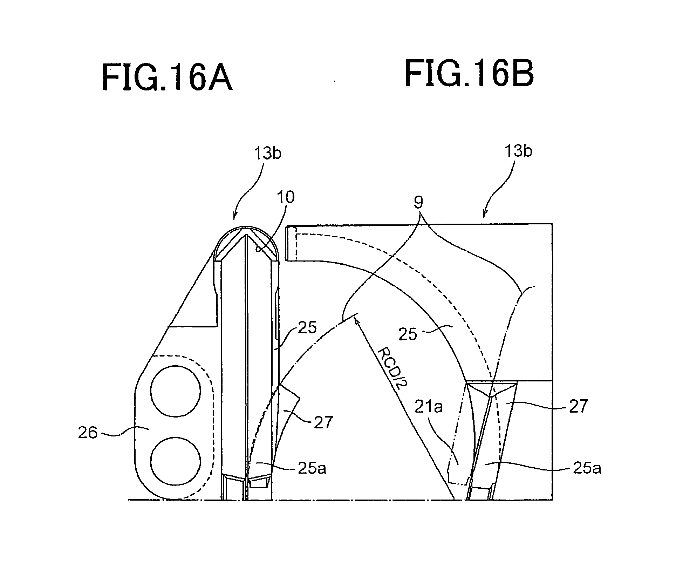

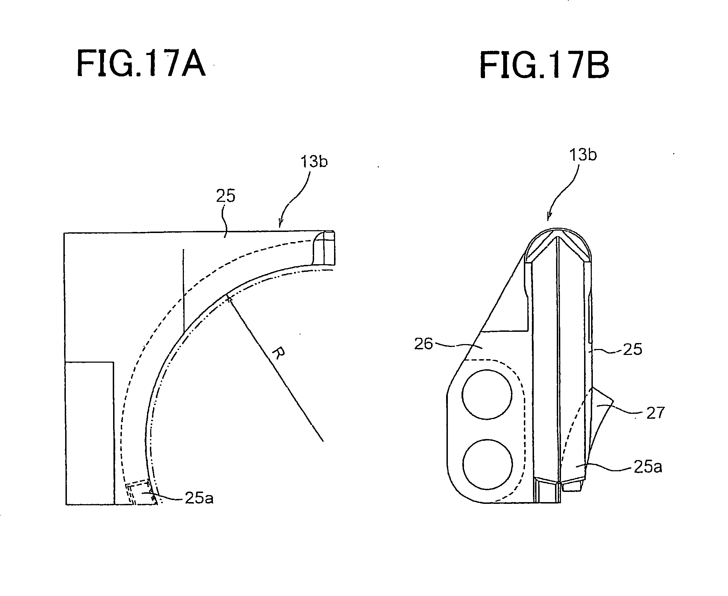

Figs. 16A, 16B, 17A and 17B illustrate an outer-side member 13b of the direction change path member. This outer-side member 13b of the direction change path member has a main body 25 where the direction change path 16 of curvature radius R is formed, and a flange portion 26 attached to an end surface of the nut 6. At one end of the main body 25, a scoop portion 25a is formed to enter the load roller rolling path 9 and scoop rollers. The other end of the main body 25 is fit into the pipe 12. The scoop portion 25a of the outer-side member 13b scoops rollers 7, which roll in the spiral load roller rolling path 9, in the tangential direction in cooperation with the scoop portion 21a of the inner-side member 13a. Immediately after scooping each roller 7, the direction change path 16 changes the direction of the roller 7 and makes the roller move along the arc-shaped direction change path 16. In addition, on the outer-side member 13b of the direction change path member, a protruding portion 27 is formed to conform to the shape of the roller rolling groove 5a of the screw shaft 5 thereby to give adequate strength to the scoop portion 25a. The direction change path member 13 may be formed of metal or resin.

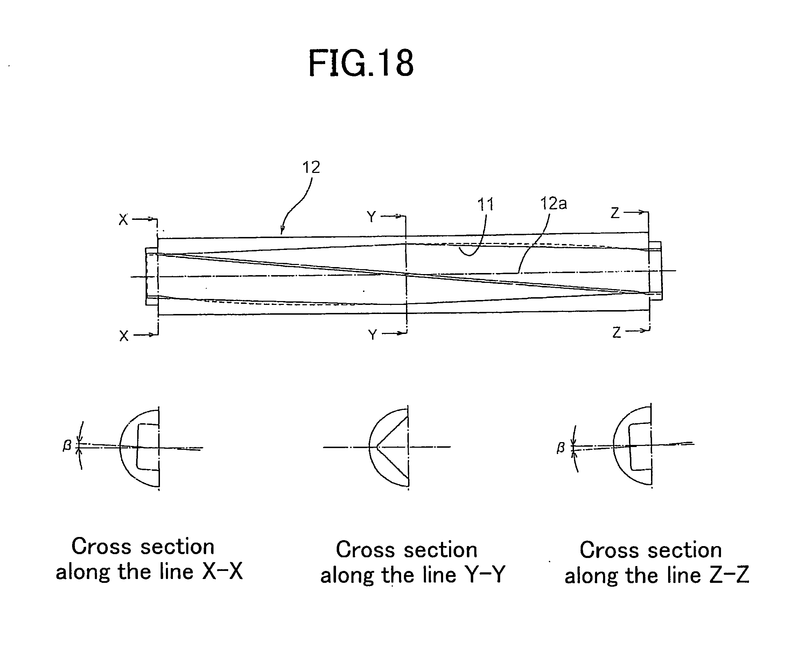

Fig. 18 is a cross-sectional view of the pipe 12. The straight-line section 11 of the unloaded roller return path 10 is twisted so that the attitude of each roller 7 is rotated while the roller 7 passes through the straight-line section 11. Moving along the center line 12a of the straight-line section 11, the roller 7 rotates around the center line 12a. Here, the moving distance of the roller 7 is proportional to the rotation angle of the roller 7. In this example, while moving from one end of the unloaded roller return path 10 to the other end, the roller 7 rotates approximately 90 + 2β degrees (the open angle γ of the pair of direction change paths seen in the direction of axis line of the screw shaft) . The pipe 12 is divided into two along the center line thereof. The pipe 12 may be made of metal or resin.

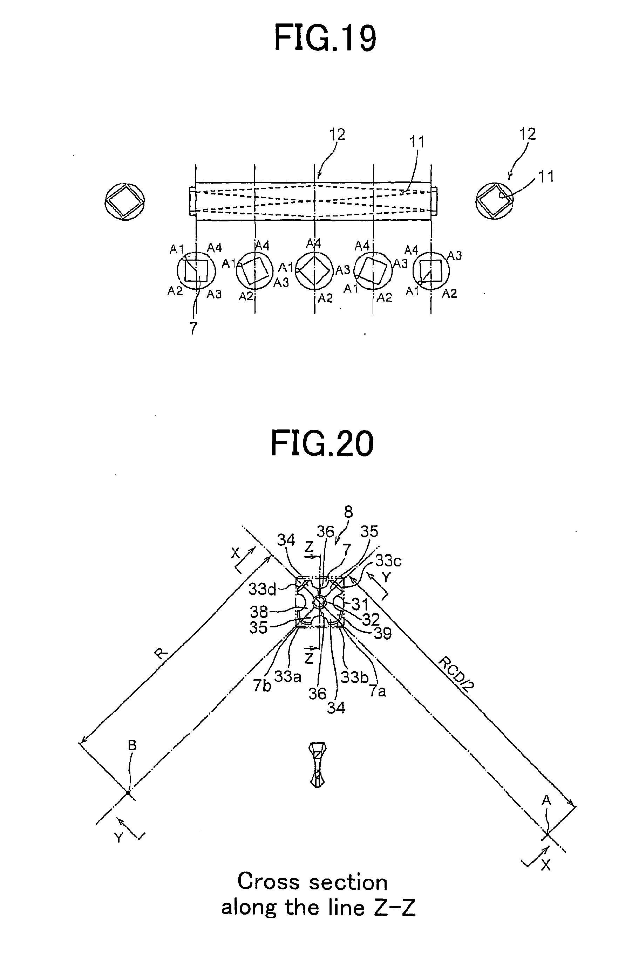

Fig. 19 illustrates rotation of the attitude of each roller 7 moving in the straight-line section 11. As is seen from Fig. 19, as the roller 7 moves in the straight-line section 11, the position of A1 of the roller 7 is moved from the obliquely upper left position to the obliquely lower left portion and the attitude of the roller 7 is rotated approximately 90 degrees.

As the attitude of the roller 7 is rotated in the straight-line section 11, it is possible to conform the attitude of the roller 7 having box-shaped side surfaces to the box-shaped cross section of the load roller rolling path 9 when the roller 7 is scooped from the load roller rolling path 9 and returned to the load roller rolling path 9.

Besides, as the attitude of the roller 7 is rotated the approximately equal angle to the open angle γ of the paired direction change paths 16, the roller which takes a load from one direction (1) of axis line of the screw shaft 5 is returned to the load roller rolling path 9 without being flipped (in other words, in such a state that the roller 7 can take a load from one direction (1) of axis line of the screw shaft 5 again) . Each retainer 8 provided between rollers 7 is also allowed to return to the load roller rolling path 9 without being flipped. As described later, the retainer 8 is formed of sector shape. If the sector-shaped retainer 8 is flipped, the inner-side width of the retainer 8 will become larger in spite of the fact that the outer-side width has to be larger. Hence, by rotating the attitude of the roller 7 the approximately equal angle to the open angle γ of the paired direction change paths 16, the roller 7 and the retainer 8 are prevented from being flipped.

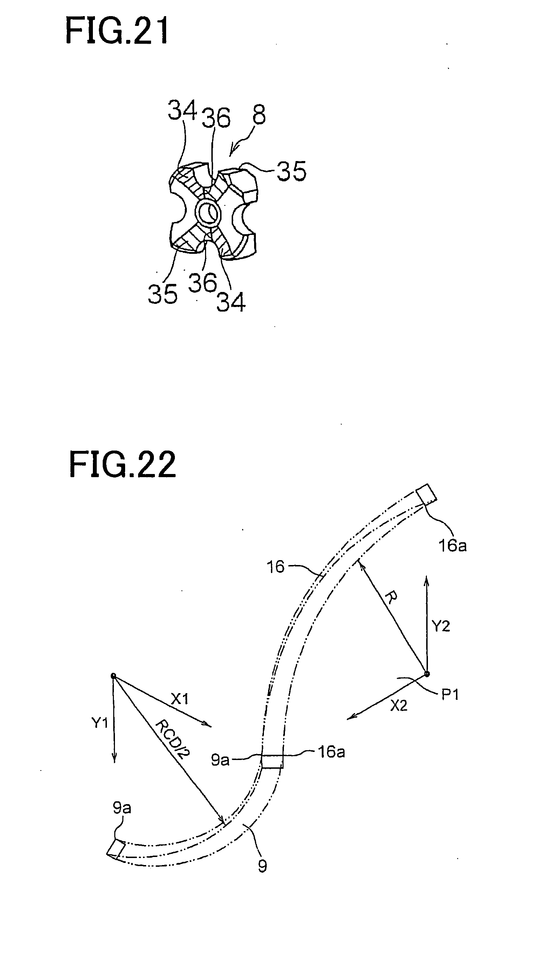

Figs. 20 and 21 are detailed views of the retainer 8 used in this embodiment. Fig. 20 is a front view (partially including a cross-sectional view taken along the line Z-Z) and Fig. 21 is a perspective view. In conformity with the box-shaped cross sections of the load roller rolling path 9 and the direction change path 16, the retainer 8 is formed into a square or box shape. At a center portion of each of the four sides of the retainer 8, an escape groove 31 is formed to hold a lubricant agent therein. At a center portion of the retainer 8, a through hole 32 is formed also to hold a lubricant agent therein. Besides, in the front view, each of the lower two corners 33a and 33b of the retainer 8 is chamfered into an arc shape. This shape of the retainer 8 makes it possible to distinguish the tope from the bottom of the retainer 8 and to prevent the retainer 8 from being inserted into the load roller rolling path 9 and the unloaded roller return path 10, top side down.

In the front surface of the retainer 8, there are formed a first inclined surface 34 (indicated by oblique lines in Fig. 21) for keeping the angle formed by the axis lines of paired rollers 7 at both sides of the retainer 8 to a predetermined angle α and a second inclined surface 35 (indicated by oblique lines in Fig. 21) for keeping the angle formed by the axis lines of paired rollers 7 at both sides of the retainer 8 to a predetermined angle β that is different from the angle α. At the boundary between the first inclined surface 34 and the second inclined surface 35, there is formed an edge line 36. The roller 7 is in contact with the retainer 8 while changing the contact position between the first inclined surface 34 and the second inclined surface 35 at respective sides of the edge line 36. Here, the first inclined surface 34 and the second inclined surface 35 may be formed only in the front surface of the retainer 8 or in both the front surface and the back surface of the retainer 8.

As illustrated in Fig. 20, while each roller 7 and each retainer 8 move in the load roller rolling path 9, the roller 7 and the retainer 8 move on the arc-shaped track of radius RCD/2 having the point A on the center line of the screw shaft 5 as its center. While the roller 7 and the retainer 8 move in the direction change path 16, the roller 7 and the retainer 8 move on the circular track of radius R having the center B of the direction change path 16 as its center. When the roller 7 moves in the load roller rolling path 9, the corner 7a of the roller 7 is positioned at the inner side of the load roller rolling path 9 and when the roller 7 moves in the direction change path 16, the corner 7b of the roller 7 is positioned at the inner side of the direction change path 16. As viewed from the center of the roller 7, the corner 7a and the corner 7b are displaced 90° with respect to each other. Hence, when the roller 7 moves in the load roller rolling path 9, the roller 7 is in contact with the first inclined surface 34 of the retainer 8 and when the roller 7 moves in the direction change path 16, the roller 7 is in contact with the second inclined surface 35 of the retainer 8. When the roller 7 moves from the load roller rolling path 9 to the direction change path 16, the contact position between the roller 7 and the retainer 8 is changed.

Fig. 22 is a perspective view of the load roller rolling path 9 and the direction change path 16. When the roller 7 moves in the load roller rolling path 9, the corner 9a of the load roller rolling path 9 is positioned inwardly and when the roller 7 moves in the direction change path 16, the corner 16a of the direction change path 16 is positioned inwardly.

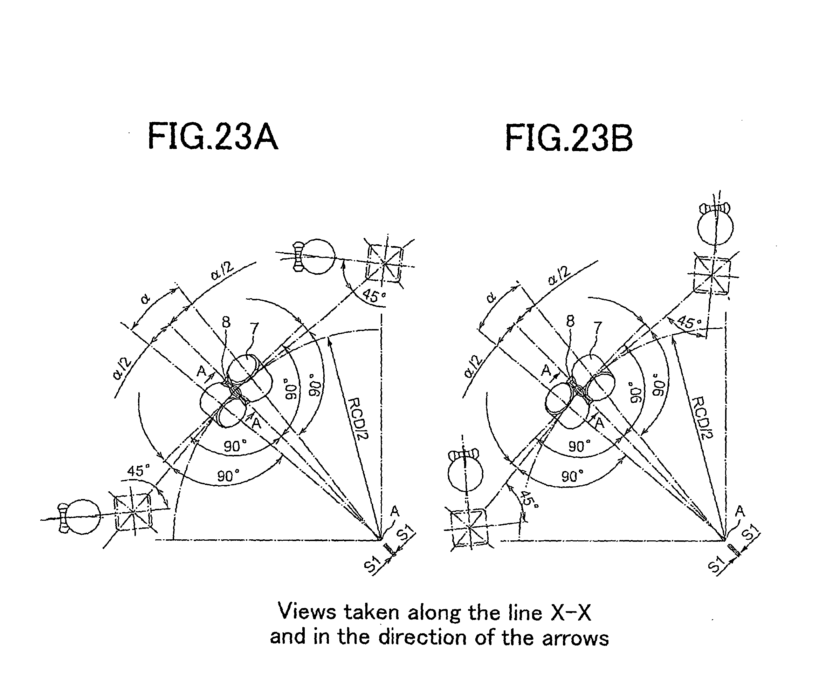

Figs. 23A and 23B illustrate rollers 7 and a retainer 8 moving in the load roller rolling path 9. As the rollers 7 at both sides of the retainer 8 are cross-arranged, the attitudes of the rollers 7 at both sides of the retainer 8 are different between Fig. 23A and Fig. 23B. In the load roller rolling path 9, the first inclined surface 34 of the retainer 8 and the rollers 7 come into contact with each other, and as viewed in the direction of axis line of the screw shaft 5 (as illustrated in Figs. 23A and 23B), the angle formed by the axis lines of the paired rollers 7 at the both sides of the retainer 8 is kept to a predetermined angle α. Then, viewed in the direction of axis line of the screw shaft 5, the axis lines of the plural rollers 7 are directed to the center A of the circular-shaped load roller rolling path 9 (axis line of the screw shaft) . More exactly, the axis lines of the rollers 7 cross each other slightly before the center A and at the center A, the axis lines are displaced with respect to the center A by a small distance of S1.

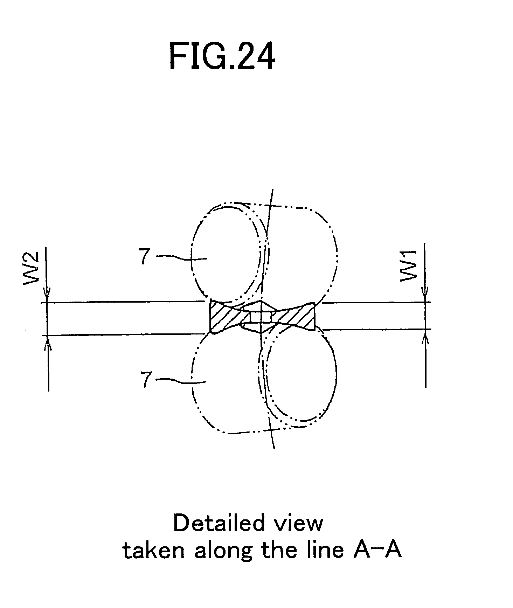

Fig. 24 is a cross-sectional view of a retainer 8 in the load roller rolling path 9 (cross-sectional view taken along the line which is close to a diagonal line of the retainer 8 and placed on the first inclined surface 34). The retainer 8 has a thinner inner-side part and a thicker outer-side part. The lateral width W1 of the inner-side part of the retainer 8 is smaller than the lateral width W2 of the outer-side part.

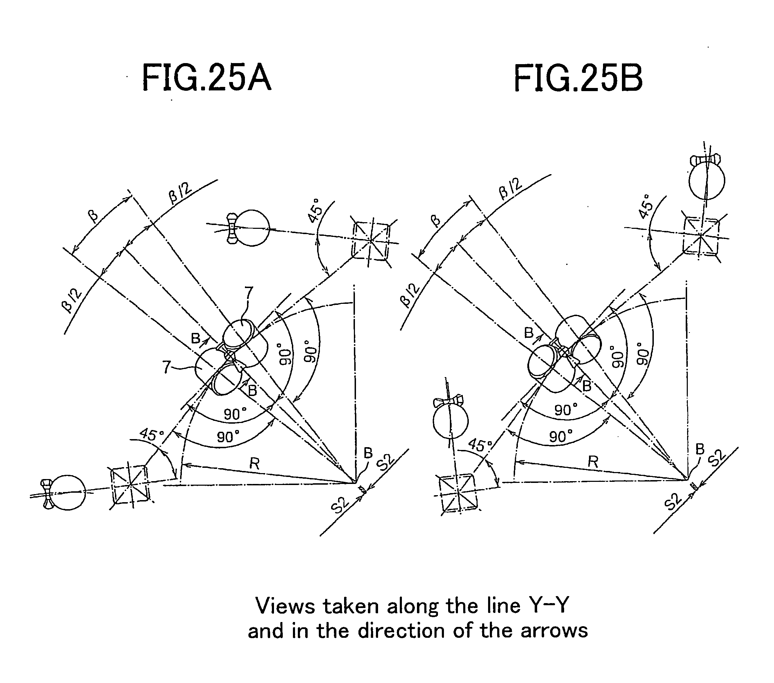

Figs. 25A and 25B illustrate rollers 7 and a retainer 8 moving in the direction change path 16. As the rollers 7 at both sides of the retainer 8 are cross-arranged, the attitudes of the rollers 7 at both sides of the retainer 8 are different between Fig. 25A and Fig. 25B. In the direction change path 16, the second inclined surface 35 of the retainer 8 and the rollers 7 come into contact with each other, and as viewed in the direction orthogonal to a plane including the direction change path 16 (as illustrated in Figs. 25A and 25B), the angle formed by the axis lines of the rollers 7 is kept to a predetermined angle β. Then, the axis lines of the plural rollers 7 are directed to the center B of the arc-shaped direction change path 16. More exactly, the axis lines of the rollers 7 cross each other slightly before the center B and at the center B, the axis lines are displaced with respect to the center B by a small distance of S2.

As the curvature radius R of the direction change path 16 is smaller than the curvature radius RCD/2 of the load roller rolling path 9, the angle β is set to be larger than the angle α so as to direct each of the axis lines to the center.

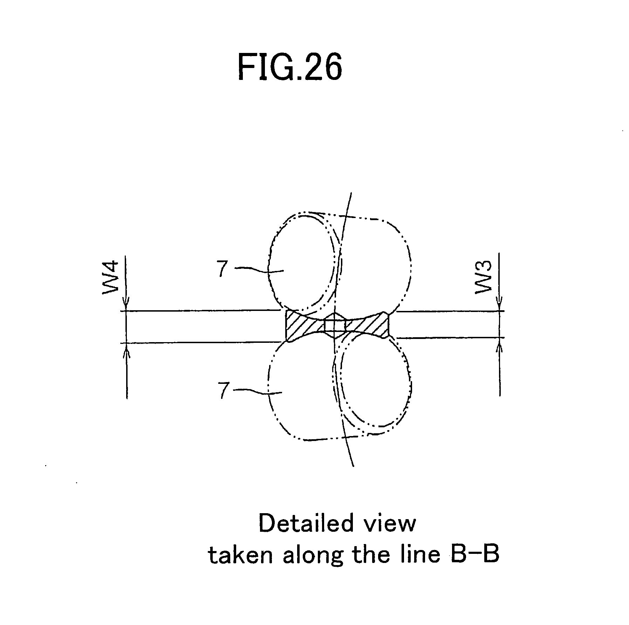

Fig. 26 is a cross-sectional view of a retainer 8 in the direction change path 16 (cross-sectional view taken along the line which is close to a diagonal line and placed on the second inclined surface 35). The retainer 8 has a thinner inner-side part and a thicker outer-side part. The lateral width W3 of the inner-side part of the retainer 8 is smaller than the lateral width W4 of the outer-side part.

In the load rolling path 9, as viewed in the direction of axis line of the screw shaft 5, the retainer 8 moves the rollers 7 while keeping the axis lines of the rollers 7 directed to the center of the circular-shaped track of the load roller rolling path 9. With this configuration, the rollers 7 move smoothly along the load roller rolling path 9 without causing a skew in which the rollers 7 are inclined with respect to the respective given axis lines. Besides, in the direction change path 16 (curved section of the unloaded roller return path 10), as viewed in the direction orthogonal to the plane including the direction change path 16, the retainer 8 moves the rollers 7 while keeping the axis lines of the rollers 7 directed to the center of the arc-shaped track of the direction change path 16. With this configuration, the rollers 7 move smoothly along the arc-shaped direction change path 16 without causing a skew.

As the retainer 8 moves along the curved line of the load roller rolling path 9 and the direction change path 16, the retainer 8 may come into contact with the wall surfaces of the load roller rolling path 9 and the direction change path 16. In this embodiment, as the retainer 8 is provided with the first inclined surface 34 and the second inclined surface 35 corresponding to the load roller rolling path 9 and the direction change path 16, respectively, the retainer 8 is prevented from coming into contact with the wall surfaces of both the load roller rolling path 9 and the direction change path 16.

At the straight-line section 11 of the unloaded roller return path 10, there is formed a small gap between a retainer 8 and a roller 7. However, irrespective of the gap, the retainer 8 and roller 8 are able to move smoothly in the straight-line section 11.

The present invention is not limited to the above-described embodiment and may be embodied in other forms without departing from the sprit and scope of the present invention. For example, the circulation member is not limited to such an end-cap type circulation member as in the above-described embodiment and various types of circulation members including a return-pipe type circulation member may be adopted. Besides, a roller used in the embodiment is of cylindrical shape and having a diameter and a length almost equal to each other, and the unloaded roller return path is formed having a square-shaped cross section. However, the roller adopted may be a cylindrical roller having a length and a diameter different from each other and the unloaded roller return path may be of rectangle shape in cross section so as to conform to the shape of the roller. In addition, a cone-shaped roller may be adopted and the unloaded roller return path may be of trapezoid in cross section so as to conform to the cone shape of the roller.

Further, the track of the direction change path does not necessarily have to be an arc with a fixed curvature. However, it may be various kinds of curves such as clothoid curve.

The present invention is based on Japanese Patent Application No.2004-328496 filed on November 12, 2004. The entire contents thereof are incorporated herein.

## Claims

1. A roller screw comprising:
a screw shaft having a spiral roller rolling groove formed on an outer surface;
a nut having a spiral roller rolling groove formed on an inner surface to face the roller rolling groove of the screw shaft;
a circulation member having a unloaded roller return path formed to connect one end of a load roller rolling path between the roller rolling groove of the screw shaft and the roller rolling groove of the nut to an opposite end of the load roller rolling path;
a plurality of rollers arranged in the load roller rolling path and the unloaded roller return path; and
a retainer arranged between each two adjacent rollers of the rollers,
the retainer having on a front surface in contact with a corresponding roller of the rollers
a first inclined surface for, in the load roller rolling path, keeping an angle formed by axis lines of the two rollers at both sides of the retainer to a predetermined angle (α) as viewed in a direction of axis line of the screw shaft, and
a second inclined surface for, in a curved section extending curvedly of the unloaded roller return path, keeping the angle formed by the axis lines of the two rollers at both sides of the retainer to a predetermined angle (β) different from the angle (α) as viewed in a direction orthogonal to a plane including the curved section.

2. The roller screw of claim 1, wherein in the load roller rolling path, the axis lines of the rollers are directed to a center of a circular track of the load roller rolling path as viewed in the direction of axis line of the screw shaft, and in the curved section of the unloaded roller return path, the axis lines of the rollers are directed to a center of a curved track of the curved section as viewed in the direction orthogonal to the plane including the curved section.

3. The roller screw of claim 1 or 2, wherein an edge line is formed between the first inclined surface and the second inclined surface.

4. The roller screw of any one of claims 1 to 3, wherein the roller rolling groove of the screw shaft is V-shaped in cross section, the roller rolling groove of the nut is V-shaped in cross section, the load roller rolling path and the unloaded roller return path are almost box-shaped in cross section, each of the rollers is cylindrical in cross section, and in the load roller rolling path and the unloaded roller return path the rollers are cross-arranged in such a manner that the axis lines of the two adjacent rollers are orthogonal to each other as viewed in a moving direction of the rollers.

5. The roller screw of any one of claims 1 to 4, wherein the unloaded roller return path has a straight-line section extending straight in parallel with the axis line of the screw shaft, and the curved section of the unloaded roller return path is provided at each end of the straight-line section to be connected to the load roller rolling path.

6. A roller screw comprising:
a screw shaft having a spiral roller rolling groove formed on an outer surface;
a nut having a spiral roller rolling groove formed on an inner surface to face the roller rolling groove of the screw shaft;
a circulation member having a unloaded roller return path formed to connect one end of a load roller rolling path between the roller rolling groove of the screw shaft and the roller rolling groove of the nut to an opposite end of the load roller rolling path;
a plurality of rollers arranged in the load roller rolling path and the unloaded roller return path; and
a retainer arranged between each two adjacent rollers of the rollers,
the retainer having on a front surface in contact with a corresponding roller of the rollers
a first inclined surface for keeping an angle formed by axis lines of the two rollers at both sides of the retainer to a predetermined angle (α) and
a second inclined surface for keeping the angle formed by the axis lines of the two rollers at both sides of the retainer to a predetermined angle (β) different from the angle (α).

7. A roller screw comprising:
a screw shaft having a spiral roller rolling groove formed on an outer surface;
a nut having a spiral roller rolling groove formed on an inner surface to face the roller rolling groove of the screw shaft;
a circulation member having a unloaded roller return path formed to connect one end of a load roller rolling path between the roller rolling groove of the screw shaft and the roller rolling groove of the nut to an opposite end of the load roller rolling path;
a plurality of rollers arranged in the load roller rolling path and the unloaded roller return path; and
a retainer arranged between each two adjacent rollers of the rollers,
the retainer having on a front surface in contact with a corresponding roller of the rollers
a first inclined surface for, in the load roller rolling path, keeping an angle formed by axis lines of the two rollers at both sides of the retainer to a predetermined angle (α) as viewed in a direction of axis line of the screw shaft, and
in the load roller rolling path, the axis lines of the rollers being directed to a center of a circular track of the load roller rolling path as viewed in the direction of axis line of the screw shaft.

8. A roller screw comprising:
a screw shaft having a spiral roller rolling groove formed on an outer surface;
a nut having a spiral roller rolling groove formed on an inner surface to face the roller rolling groove of the screw shaft;
a circulation member having a unloaded roller return path formed to connect one end of a load roller rolling path between the roller rolling groove of the screw shaft and the roller rolling groove of the nut to an opposite end of the load roller rolling path;
a plurality of rollers arranged in the load roller rolling path and the unloaded roller return path; and
a retainer arranged between each two adjacent rollers of the rollers,
the retainer having on a front surface in contact with a corresponding roller of the rollers
a second inclined surface for, in a curved section extending curvedly of the unloaded roller return path, keeping the angle formed by the axis lines of the two rollers at both sides of the retainer to a predetermined angle (β) as viewed in a direction orthogonal to a plane including the curved section, and
in the curved section of the unloaded roller return path, the axis lines of the rollers being directed to a center of a curved track of the curved section as viewed in the direction orthogonal to the plane including the curved section.
